Europäisches Patentamt

European Patent Office

Office européen des brevets

(19)

(11) **EP 0 875 671 A1**

(12) **EUROPÄISCHE PATENTANMELDUNG**

(43) Veröffentlichungstag:
04.11.1998 Patentblatt 1998/45

(51) Int. Cl.⁶: **F02B 25/04**, F02M 25/03,
F02B 41/00, F01N 3/04

(21) Anmeldenummer: 97107191.5

(22) Anmeldetag: 30.04.1997

(84) Benannte Vertragsstaaten:
**AT CH DE ES FR GB IT LI NL SE**
Benannte Erstreckungsstaaten:
**SI**

(71) Anmelder:
**von Görtz & Finger Techn. Entwicklungs
Ges.m.b.H.
36110 Schlitz (DE)**

(72) Erfinder:
• **Finger, Ulrich
87647 Oberthingau (DE)**
• **von Görtz, Rüdiger Graf
36110 Schlitz (DE)**

(54) **Neues Spülverfahren für Verbrennungsmotoren**

(57)     Das erfinderisch neue Spülverfahren von oben nach unten mit oberer Druckkammer (1) erlaubt einen Betrieb ohne Nockenwelle. Die gesammte Steuerung der Spülung wird von dem federgehaltenen Einlaßventil (3) und dem Kolben (5), der als Schieber für die Auslaß-öffnungen (7) dient, übernommen.

    Mit dieser neuen Spülung des Brennraumes können 2-Takt und 2+2-Takt Dieselmotore ausgerüstet werden. Auch für direkteinspritzende Ottomotore kann diese neue Spülung im 2-Takt Verfahren verwendet werden.

    Dieses neue Spülverfahren eignet sich besonders gut für die zusätzliche Einspritzung einer Flüssigkeit nach der Wärmeerzeugung des Brennstoffes bei der Explosion, da durch die Dampfbildung dem Brennraum Wärme entzogen wird und auf eine zusätzliche Kühlung verzichtet werden kann.

**Fig.2**

**EP 0 875 671 A1**

## Beschreibung

Alle Verbrennungskraftmaschinen benötigen Sauerstoff für die Verbrennung. Dieser Sauerstoff wird den Motoren durch Luft, bestehend aus 78% Stickstoff, 21% Sauerstoff und 1% sonstiger Gase, zugeführt.

Bei kleinen und mittleren 4-Takt Dieselmotoren wird die Verbrennungsluft im ersten Takt durch ein Ventil, das von einer Nockemwelle geöffnet wird, von dem abwärtsbewegten Kolben angesaugt.

**Fig.1**

Größere Dieselmotoren arbeiten nach dem 2-Takt Verfahren, so daß die Spülung im unteren Totpunkt U.T. erfolgt. Gespült wird dabei **von unten nach oben**, indem durch ein Gebläse **2** Frischluft durch die unteren Öffnungen **7** eingeblasen wird und das Abgas durch obere Ventile **11** , die durch Nockenwellen **12** betätigt werden, ausströmt.

**Fig.2**

Die Erfindung bezieht sich auf ein Spülverfahren, bei dem der Spülvorgang **von oben nach unten** erfolgt. In einem oberen Druckbehälter **1** wird durch einen geeigneten Verdichter **2** ein Überdruck von ca.1,8 bar erzeugt. Das Einlaßventil **3** wird durch eine Feder **4** nur so stark nach oben gedrückt, daß es bei drucklosem Zustand geschlossen bleibt.

Erreicht der Kolben **5** den unteren Totpunkt U.T. fällt der Restdruck im Brennraum **6** schlagartig ab und die gespeicherte Luft im Druckspeicher **1** spült durch das große Ventil **3** mit einem Druck von ca.1,8 bar durch den Brennraum **6** und drückt die Abgase durch die unteren Öffnungen **7** nach außen.

Nach dem Spülvorgang verschließt der Kolben **5** beim Aufwärtshub die Öffnungen **7** und es entsteht im Brennraum **6** ein Überdruck der das obere Einlaßventil **3** gegen die Feder zudrückt.

Die Verdichtung beträgt nach Erreichen des Kolbens **5** am oberen Totpunkt O.T. ca.1:20. In diese komprimierte Luft wird durch eine Hochdruckdüse **9** der Brennstoff (Diesel) einige Grad vor O.T. eingespritzt. Es erfolgt eine Explosion, die den Kolben **5** nach unten drückt. Dabei wird die Kraft über das Pleuel **8** auf die Kurbelwelle übertragen. Nach Erreichen des U.T. erfogt wieder die Spülung **von oben nach unten** und der Verdichtungshub beginnt erneut.

Für dieses neue Spülverfahren ist **keine** Nockenwelle erforderlich, da sich das Einlaßventil **3** selbsttätig über den Druck steuert. Ebenfalls werden die Auslaßöffnungen durch den Kolben **5** geöffnet und verschlossen.

**Fig.3**

Um eine bessere Nutzung des eingespritzten Brennstoffes zu erreichen, kann nach abgeschlossener Verbrennung einige Grad nach O.T. durch eine zweite Hochdruckdüse **10** Wasser mit einem Zusatz (z.B. Ammoniak $NH^3$) eingespritz werden. Das Wasser-Ammoniakgemisch NH4OH (Salmiakgeist) verdampft schlagartig in Millisekunden und erzeugt Flashdampf, der durch seine große Expansion den Kolben **5** zusätzlich nach unten drückt.

Der Kolben **5** vergrößert beim Abwärtshub den Brennraum **6** und damit auch das Volumen; dadurch fällt der Druck im Brennraum proportional ab. $p^2 \times v^2 = p^3 \times v^3$ . Der fallende Druck im Brennraum **6** bewirkt bei dem erzeugten Flashdampf eine Nachverdampfung, do daß der Expansionsdruck bis zum U.T. erhalten bleibt. Durch diesen Vorgang wird das Drehmoment des Verbrennungsmotors wesentlich verbessert. **Fig.4**

Da Ammoniak $NH^3$ mit dem durch die Verbrennung erzeugten $CO^2$ schnell eine Verbindung bildet, entsteht Harnstoff $H^2N-CO-NH^2$, der eine erhebliche Reduzierung des **NOx** im Abgas bewirkt.

**Fig.5**

Die gleiche bessere Nutzung kann auch dadurch erreicht werden, daß der Verbrennungsmotor im **2+2 Takt-Verfahren** betrieben wird. Bei diesem Verfahren erfolgt die Spülung ebenfalls **von oben nach unten**, jedoch bleiben nach dem ersten Erreichen des U.T. die unteren Öffnungen **7** durch einen geeigneten Verschluß (z.B.Magnetventile) geschlossen. Bei der anschließenden Nachverdichtung wird durch einen geeigneten Speicher (z.B.Stickstoff-,Feder- oder Magnet-Druckdose) der erhöhte Druck aufgenommen.

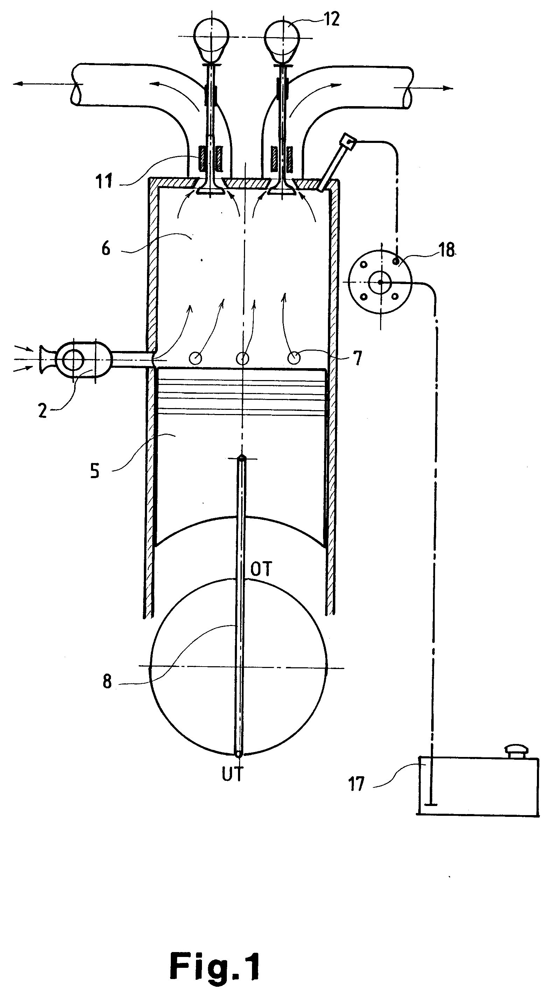

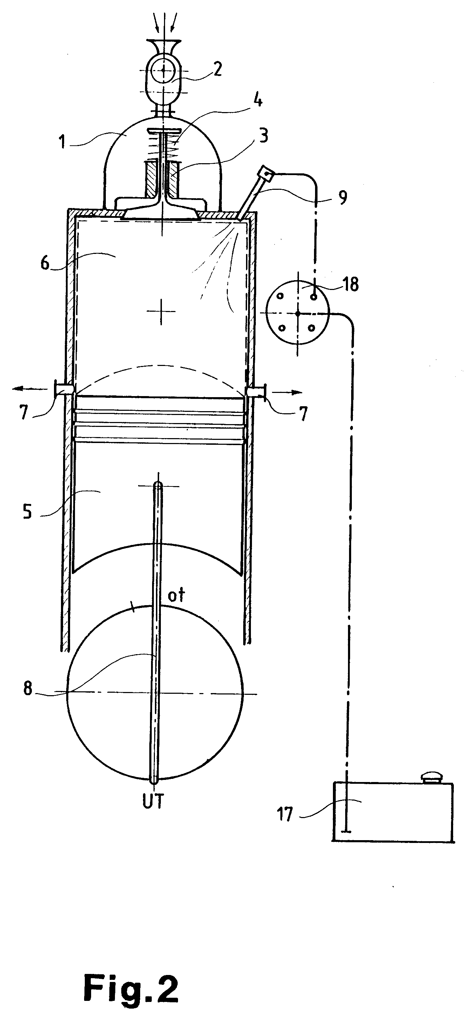

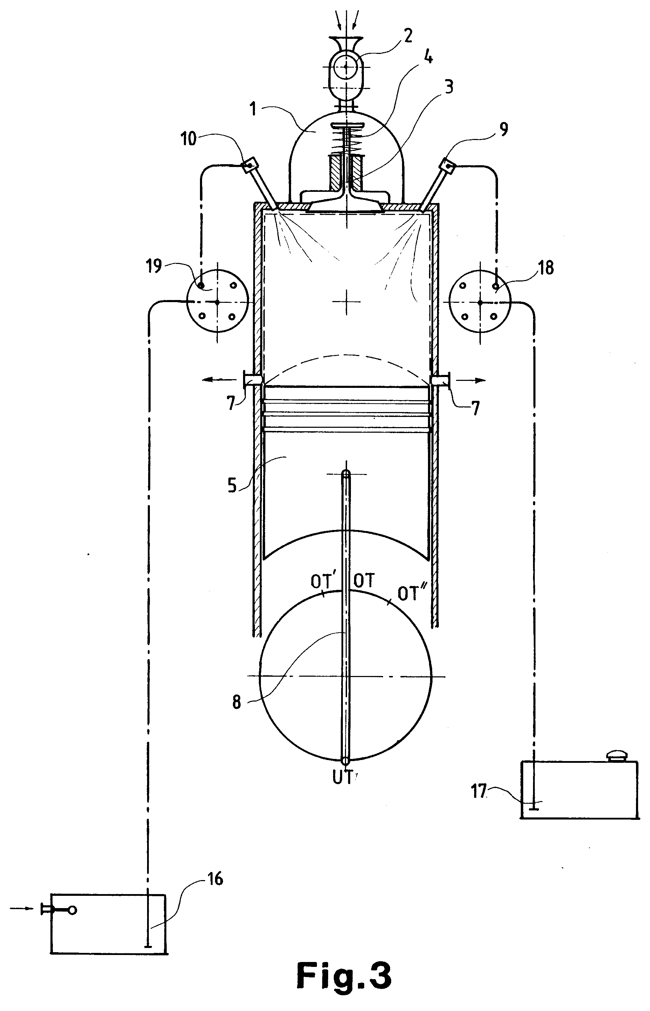

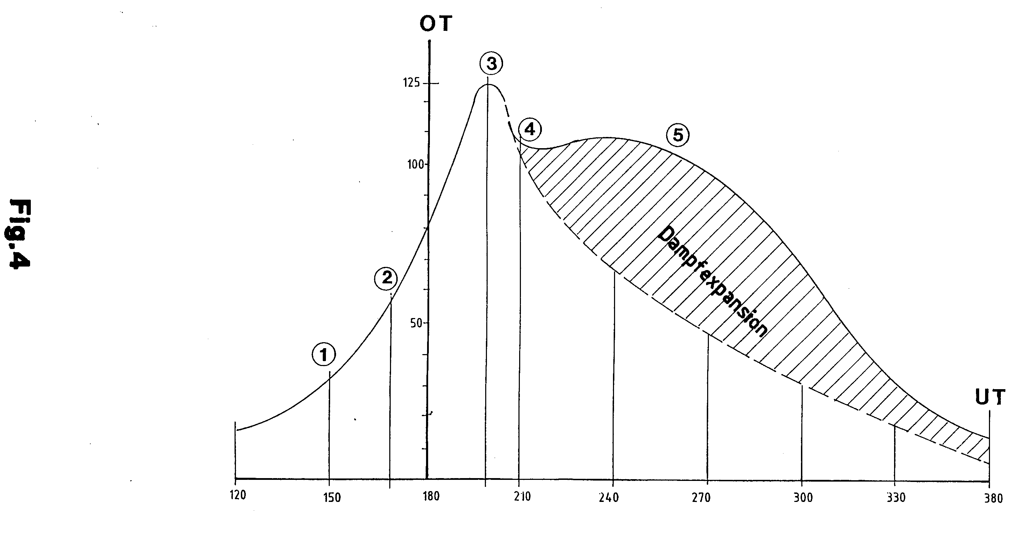

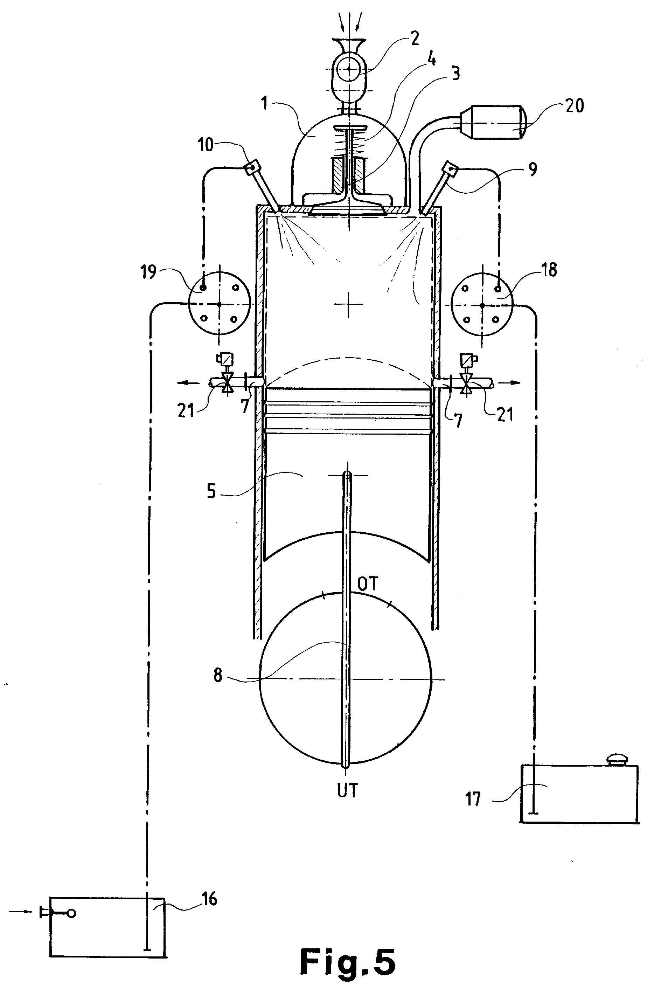

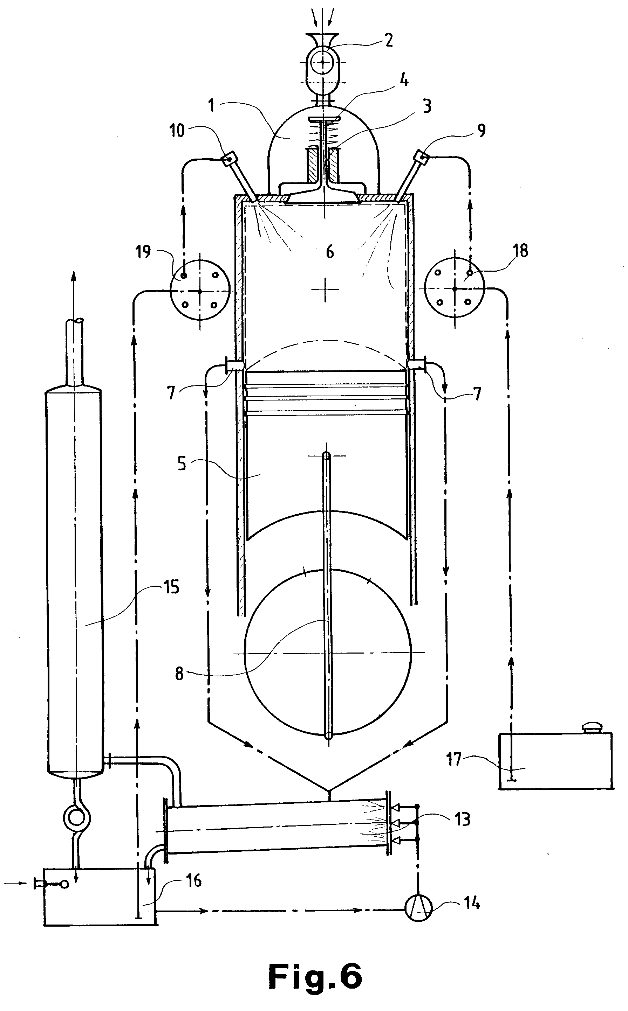

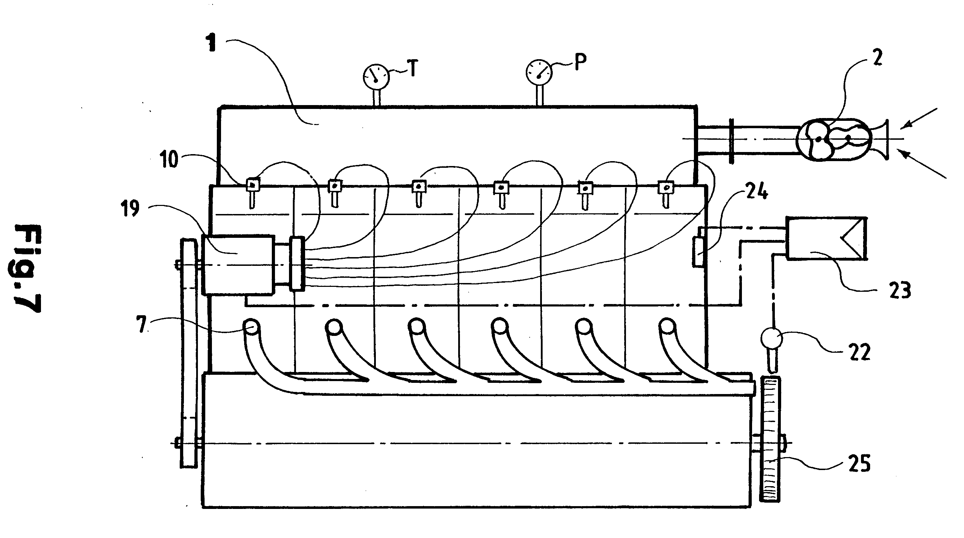

Nach Erreichen des O.T. wird Wasser mit einem Zusatz durch eine zweite Hochdruckdüse **10** eingespritzt und durch den schlagartig erzeugten Flashdampf der Kolben **5** nach unten gedrückt. Auch bei diesem Verfahren ergeben sich die gleichen Vorteile wie bei **Fig.3**

**Fig.6**

Durch die zusätzliche Einspritzung von Wasser mit Ammoniak strömt aus den unteren Öffnungen **7** ein Gemisch aus sehr feuchtem Abgas, das nahe dem Naßdampfbereich liegt. Durch einen Einspritzkondensator **13** kann der Restdampf durch das Einspritzen von kalter Flüssigkeit schlagartig kondensiert werden. Es entsteht dabei ein **Vakuum**, mit dem eine zusätzliche Saugwirkung an den Auslaßöffnungen **7** erzeugt wird.

Die Einspritzpumpe **14** spritzt über mehrere Düsen die kalte Flüssigkeit in das Abgas-Dampfgemisch. Die Flüssigkeit wird dem Vorratsbehälter **16** entnommen, der über einen Schwimmerschalter auf gleichen Niveau gehalten wird.

Das verbleibende Abgas aus dem Einspritzkondensator **13** strömt in einen Entgaser **15**, wo die restliche Feuchtigkeit vom Abgas getrennt wird. Das anfallende Kondensat gelangt über ein Trompetenrohr zurück in den Vorratsbehälter **16**.

Durch die sehr intensive Vermischung der Abgase mit dem Wasser-Ammoniakgemisch werden die Abgase von Rußpartikeln und NOx Anteil gereinigt.

**Fig.7**

Die Steuerung des Verbrennungsmotors mit Wassereinspritzung wird über einen Sensor **22**, der über dem Schwungrad **25** angeordnet ist, geregelt. Das Steuergerät **23** gibt die Daten an die Einspritzpumpe **19** weiter. Die Einpritzmenge der Flüssigkeit bestimmt der Oberflächen-Temperaturfühler **24**, der genau soviel Flüssigkeit anfordert, daß die Zündtemperatur im O.T. erreicht und daß der Motor nicht überhitzt wird.

Durch die Wassereinspritzung kann auf eine übliche Motorkühlung durch Kühlwasser oder Kühlluft **verzichtet werden!**

| | |
|---|---|
| 1) | **Druckspeicher** |
| 2) | **Verdichter** |
| 3) | **Großes Ventil** |
| 4) | **Ventilfeder** |
| 5) | **Kolben** |
| 6) | **Brennraum** |
| 7) | **Auslaßöffnungen** |
| 8) | **Pleuelstange** |
| 9) | **Einspritzdüse (Diesel)** |
| 10) | **Einspritzdüse (Wasser)** |
| 11) | **Auslaßventile** |
| 12) | **Nockenwelle** |
| 13) | **Einspritzkondensator** |
| 14) | **Einspritzpumpe (Kondensat)** |
| 15) | **Abgasentgaser** |
| 16) | **Vorratsbehälter (Wasser)** |
| 17) | **Brennstofftank (Diesel)** |
| 18) | **Einspritzpumpe (Diesel)** |
| 19) | **Einspritzpumpe (Wasser)** |
| 20) | **Druckzwischenspeicher** |
| 21) | **Magnetauslaßventile** |
| 22) | **Drehzahlsensor** |
| 23) | **Steuergerät** |
| 24) | **Temperatursensor** |
| 25) | **Schwungrad** |

**Patentansprüche**

1. Verfahren zur Spülung des Brennraumes einer Wärmekraftmaschine dadurch gekennzeichnet, daß die Spülung von oben nach unten erfolgt.

2. Verfahren nach Anspruch1) dadurch gekennzeichnet, daß sich über dem Brennraum ein Druckspeicher befindet, der durch einen geeigneten Verdichter aufgeladen wird.

3. Verfahren nach Anspruch 2) dadurch gekennzeichnet, daß sich in der Druckkammer ein Einlaßventil befindet, daß durch eine Feder im drucklosen Zustand geschlossen wird.

4. Verfahren nach Anspruch 3) dadurch gekennzeichnet, daß der Kolben im Bereich U.T. die Auslaßöffnungen öffnet und verschließt.

5. Verfahren nach Anspruch 4) dadurch gekennzeichnet, daß nach der Explosion des Brennstoffes verzögert Wasser mit einem Zusatz eingespritzt wird.

6. Verfahren nach Anspruch 5) dadurch gekennzeichnet, daß die unteren Auslässe auch durch ein geeignetes Ventil geschlossen werden können, um im 2+2 Takt-Verfahren Wasser mit einem geeigneten Zusatz einzuspritzen.

7. Verfahren nach Anspruch 6) dadurch gekennzeichnet, daß im oberen Bereich des Brennraumes ein Zwischenspeicher angebaut ist, der den entstehenden Überdruck beim Nachverdichten aufnimmt und wieder abgibt.

8. Verfahren nach Anspruch 7) dadurch gekennzeichnet, daß an den Auslaßöffnungen ein Einspritzkondensator angeschlossen ist der den Dampf kondensiert und dadurch ein Vakuum erzeugt, mit dem das Abgasgemisch aus dem Brennraum abgesaugt wird.

9. Verfahren nach Anspruch 8) dadurch gekennzeichnet, daß mit einem Temperatursensor die Zylinderoberfläche gemessen wird und danach die Flüssigkeitseinspritzmenge so geregelt wird, daß keine zusätzliche Kühlung benötigt wird.

# Fig.1

# Fig.2

**Fig.3**

**Fig.4**

**Fig.5**

**Fig.6**

**Fig.7**

| | Europäisches Patentamt | **EUROPÄISCHER RECHERCHENBERICHT** | Nummer der Anmeldung<br>EP 97 10 7191 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | FR 2 676 503 A (CHEVENET JEAN CHARLES) 20.November 1992 | 1-4 | F02B25/04<br>F02M25/03 |
| Y | * Seite 6, Zeile 13 - Seite 7, Zeile 7; Abbildungen 1,2 * | 5-9 | F02B41/00<br>F01N3/04 |
| | --- | | |
| Y | EP 0 756 076 A (VON GOERTZ & FINGER TECHN ENTW) 29.Januar 1997<br>* das ganze Dokument * | 5-9 | |
| | --- | | |
| X | US 3 199 497 A (D.A. DREISBACH) 10.August 1965<br>* Spalte 2, Zeile 18 - Zeile 26 *<br>* Spalte 4, Zeile 21 - Zeile 29; Abbildungen * | 1-4 | |
| | --- | | |
| X | US 4 671 218 A (WEILAND CARL) 9.Juni 1987<br>* Abbildungen * | 1-4 | |
| | --- | | |
| X | US 5 101 794 A (VAN BLARICOM TERRY M) 7.April 1992<br>* Abbildungen * | 1-4 | RECHERCHIERTE SACHGEBIETE (Int.Cl.6) |
| | --- | | |
| X | GB 2 140 867 A (ANCHETA ANTONIO) 5.Dezember 1984<br>* Abbildung 1 * | 1-4 | F02B<br>F02M<br>F01N |
| | --- | | |
| A | EP 0 718 489 A (WAERTSILAE DIESEL INT) 26.Juni 1996<br>* Spalte 1, Zeile 37 - Zeile 48 * | 5 | |
| | --- | | |
| A | WO 95 32360 A (VON GOERTZ & FINGER TECH ENTWI ;GRAF VON GOERTZ RUEDIGER (DE); FIN) 30.November 1995<br>* das ganze Dokument * | 1 | |
| | --- | | |
| A | US 744 881 A (H. SÖHNLEIN) 28.September 1903 | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 1.Oktober 1997 | Alconchel y Ungria,J |

EPO FORM 1503 03.82 (P04C03)